# EUROPEAN PATENT APPLICATION

(11) **EP 4 604 291 A1**
(43) Date of publication of application: **20.08.2025**
(21) Application number: 23876256.1
(22) Date of filing: 30.06.2023
(51) Int. Cl.: H01M 50/244, H01M 10/6568, H01M 50/204, H01M 10/625, H01M 50/249

(54) **BATTERY PACK AND VEHICLE**

(30) Priority: 13.10.2022 CN 202222704224 U
(71) Applicant: BYD Company Limited, Shenzhen, Guangdong 518118 (CN)
(72) Inventor: LI, Jianqiang, Shenzhen, Guangdong 518118 (CN); WAN, Long, Shenzhen, Guangdong 518118 (CN); WEI, Chengfeng, Shenzhen, Guangdong 518118 (CN); KUANG, Gang, Shenzhen, Guangdong 518118 (CN)
(74) Representative: Mathys & Squire
(86) International application number: PCT/CN2023/104468
(87) International publication number: WO 2024/078047

(57) **Abstract**

A vehicle with a battery pack. The battery pack comprises a tray, a cell module and a liquid cooling plate. The tray comprises a tray bottom plate and tray side beams, wherein the tray bottom plate and the tray side beams are connected to form an accommodating space; the cell module is located in the accommodating space and comprises a plurality of cells, w herein each cell is provided with a first explosion-proof valve; and the liquid cooling plate is located between the cell module and the tray bottom plate and is arranged on the tray bottom plate, and the liquid cooling plate is provided with a plurality of through holes, each through hole penetrating through a first surface and a second surface of the liquid cooling plate. The cell module is in contact with the first surface, and the first explosion-proof valves of the cells are opposite the through holes; and a first channel is formed between the second surface of the liquid cooling plate and the tray bottom plate, and a second channel, which is in communication with the first channel, is formed in the tray side beams, so that a smoke flow generated at the cell module flows to the second channel.

## Description

### CROSS-REFERENCE TO RELATED APPLICATIONS

The present disclosure claims priority to Chinese Patent Application No. 202222704224.3, filed on October 13, 2022 and entitled "BATTERY PACK AND VEHICLE". The entire content of the above-referenced application is incorporated herein by reference.

### FIELD

Embodiments of the present disclosure relate to the field of battery pack technologies, and more specifically, to a battery pack and a vehicle.

### BACKGROUND

A power battery system is generally composed of a battery module, a battery management system (BMS), a thermal management system, some electrical and mechanical systems, and the like. A power battery system on an electric vehicle is composed of a plurality of battery cores. A large amount of heat generated by the power battery system during operation is gathered in a confined battery box. If the heat cannot be quickly dissipated in time, the high temperature may affect the life of the power battery and even cause thermal runaway.

Currently, after thermal runaway occurs in battery packs commonly seen on the market, a fire is often extinguished for the battery pack through a coolant inside a liquid cooling plate. When the cooling liquid is released from inside of the liquid cooling plate into the battery pack, a short circuit and arcing of another normal battery core may be caused, resulting in a more serious consequence.

Therefore, after thermal runaway occurs in the battery packs, how to correctly exhaust smoke inside the battery pack is a technical problem to be urgently resolved.

### SUMMARY

An object of the present disclosure is to provide a new technical solution of a battery pack and a vehicle.

According to a first aspect, the present disclosure provides a battery pack. The battery pack includes
a tray, a battery core module, and a liquid cooling plate. The tray includes a tray bottom plate and tray side beams. The tray bottom plate and the tray side beams are connected to form an accommodating space.

The battery core module is located in the accommodating space. The battery core module includes a plurality of battery cores. Each of the battery cores has a first explosion-proof valve.

The liquid cooling plate is located between the battery core module and the tray bottom plate and arranged on the tray bottom plate. The liquid cooling plate has a first surface and a second surface. A plurality of through holes are formed in the liquid cooling plate. Each of the through holes extends through the first surface and the second surface.

The battery core module is in contact with the first surface. The first explosion-proof valve of the battery core is opposite to the through hole.

A first channel is formed between the second surface of the liquid cooling plate and the tray bottom plate. A second channel is formed in each of the tray side beams. The first channel is in communication with the second channel, to cause smoke generated at the battery core module to flow to the second channel.

Optionally, the battery core includes a battery core housing and a cover plate. The cover plate is arranged on the battery core housing. A first region and a second region are formed on the cover plate. The first region is recessed relative to the second region. The first region is provided with a battery core terminal therein. The second region is provided with the first explosion-proof valve therein.

The battery core module is arranged on the liquid cooling plate. A clearance exists between the battery core terminal and the first surface of the liquid cooling plate.

Optionally, a side of the tray side beam facing away from the accommodating space is provided with a second explosion-proof valve. The second channel is in communication with the second explosion-proof valve.

Optionally, the liquid cooling plate includes an upper liquid cooling plate and a lower liquid cooling plate. The upper liquid cooling plate is connected to the lower liquid cooling plate.

The upper liquid cooling plate is in contact with the battery core module.

A plurality of spaced apart convex ribs are formed on the lower liquid cooling plate. A groove is formed between adjacent convex ribs. The groove, the tray bottom plate, and the convex rib define the first channel.

Optionally, the tray side beam includes a first sub-side beam, a second sub-side beam, and a connecting plate. The first sub-side beam is arranged opposite to the second sub-side beam. The connecting plate is arranged opposite to the tray bottom plate. One end of the connecting plate is connected to the first sub-side beam. Another end of the connecting plate is connected to the second sub-side beam. The first sub-side beam, the second sub-side beam, the connecting plate, and the tray bottom plate define the second channel.

Optionally, the first sub-side beam is arranged closer to the accommodating space than the second sub-side beam. Amounting gap is formed between the first sub-side beam and the tray bottom plate. The liquid cooling plate is arranged on the tray bottom plate. An edge portion of the liquid cooling plate extends through the mounting gap and is located in the second channel, to cause the first channel to be in communication with the second channel.

Optionally, the liquid cooling plate includes a liquid cooling plate body and a cold plate interface. The liquid cooling plate body has a bearing portion formed thereon.

A slit is formed in the tray side beam. The bearing portion extends through the slit and extends out of the accommodating space. The cold plate interface is arranged on the bearing portion.

Optionally, the first channel formed by the liquid cooling plate and the tray bottom plate is arranged along a first direction of the battery pack. The tray side beams having the second channel formed therein are spaced apart in the first direction of the battery pack.

Optionally, the battery pack further includes a sealing cover. The sealing cover is arranged on the tray.

According to a second aspect, a vehicle is provided. The vehicle includes the battery pack described in the first aspect.

In the embodiments of the present disclosure, a battery pack is provided. The battery pack includes a tray, a liquid cooling plate, and a battery core module. The liquid cooling plate is located between the battery core module and the tray. A first explosion-proof valve arranged on a battery core in the battery core module is opposite to a through hole formed in the liquid cooling plate. When thermal runaway occurs in the battery core, generated high-temperature smoke is emitted, through the corresponding through hole, into a first channel formed by a second surface of the liquid cooling plate and a tray bottom plate. Since the first channel is arranged to be in communication with the second channel, the generated high-temperature smoke may flow along the first channel to the second channel. The high-temperature smoke is emitted through a tray side beam, which prevents accumulation of a large amount of high-temperature smoke in the battery pack from further affecting the safety of the battery pack.

Other features and advantages of this specification become apparent through the following detailed description of exemplary embodiments of this specification with reference to the accompanying drawings.

### BRIEF DESCRIPTION OF THE DRAWINGS

The accompanying drawings that are incorporated into and constitute a part of this specification illustrate embodiments of this specification, and are used to explain the principle of this specification together with the description.
FIG. 1 is a schematic structural diagram showing a battery pack.
FIG. 2 is a schematic diagram showing a breakdown structure of a battery pack.
FIG. 3 is a schematic structural diagram showing that a battery core module is arranged on a liquid cooling plate.
FIG. 4 is a schematic structural diagram showing a liquid cooling plate.
FIG. 5 is a schematic diagram I showing a partial structure of a battery pack.
FIG. 6 is a schematic diagram showing a battery core.
FIG. 7 is a schematic diagram II showing a partial structure of a battery pack.

### Description of reference numerals:

1. Tray; 11. Tray bottom plate; 12. Tray side beam; 121. First side beam; 122. Second side beam; 123. Third side beam; 124. Fourth side beam; 1211. First sub-side beam; 1212. Second sub-side beam; 1213. Connecting plate; 1214. Mounting gap; 125. Second explosion-proof valve; 126. Slit;
2. Battery core module; 21. Battery core; 211. Battery core housing; 212. Cover plate; 213. First explosion-proof valve; 214. Battery core terminal;
3. Liquid cooling plate; 31. First surface; 32. Second surface; 33. Through hole; 34. Upper liquid cooling plate; 35. Lower liquid cooling plate; 351. Convex rib; 352. Groove; 30. Liquid cooling plate body; 36. Cold plate interface; 301. Bearing portion;
41. First channel; 42. Second channel; and
5. Sealing cover.

### DETAILED DESCRIPTION

Various exemplary embodiments of the present disclosure are described in detail with reference to the accompanying drawings. It should be noted that unless otherwise specified, relative arrangement, numerical expressions, and numerical values of components and steps described in the embodiments do not limit the scope of the present disclosure.

The following description of at least one exemplary embodiment is actually merely illustrative, and in no way constitutes any limitation on the present disclosure and application or use thereof.

Technologies and devices known to a person of ordinary skill in the related art may not be discussed in detail, but in proper circumstances, the technologies and devices shall be regarded as a part of the specification.

In all examples shown and discussed herein, any specific value should be construed as merely exemplary and not as a limitation. Therefore, other examples of the exemplary embodiments may have different values.

It should be noted that similar reference numerals and letters denote similar items in the accompanying drawings below. Therefore, once an item is defined in an accompanying drawing, the item does not need to be further discussed in subsequent accompanying drawings.

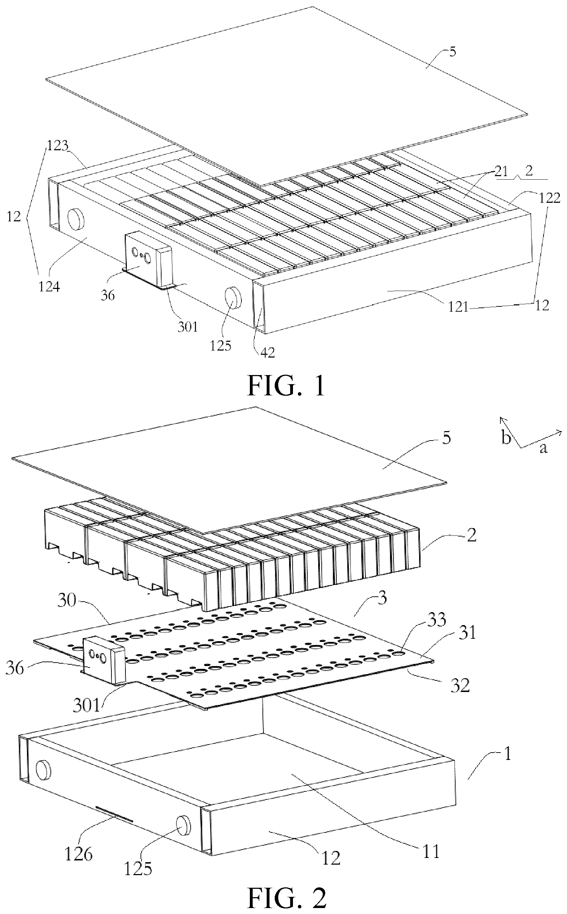

Accordingto a first aspect of the embodiments of the present disclosure, a battery pack is provided. As shown in FIG. 1 to FIG. 7, the battery pack includes a tray 1, a battery core module 2, and a liquid cooling plate 3.

The tray 1 includes a tray bottom plate 11 and tray side beams 12. The tray bottom plate 11 and the tray side beams 12 are connected to form an accommodating space.

The battery core module 2 is located in the accommodating space. The battery core module 2 includes a plurality of battery cores 21. Each of the battery cores 21 has a first explosion-proof valve 213.

The liquid cooling plate 3 is located between the battery core module 2 and the tray bottom plate 11 and arranged on the tray bottom plate 11. The liquid cooling plate 3 has a first surface 31 and a second surface 32. A plurality of through holes 33 are formed in the liquid cooling plate 3. Each of the through holes 33 extends through the first surface 31 and the second surface 32.

The battery core module 2 is in contact with the first surface 31. The first explosion-proof valve 213 of the battery core 21 is opposite to the through hole 33.

A first channel 41 is formed between the second surface 32 of the liquid cooling plate 3 and the tray bottom plate 11. A second channel 42 is formed in each of the tray side beams 12. The first channel 41 is in communication with the second channel 42, to cause smoke generated by the battery core module 2 to flow to the second channel 42.

In other words, the battery pack mainly includes a tray 1, a battery core module 2, and a liquid cooling plate 3. The tray 1 is configured to bear the battery core module 2 and the liquid cooling plate 3.

Specifically, referring to FIG. 1 and FIG. 2, the tray 1 includes the tray bottom plate 11 and the tray side beams 12. The tray bottom plate 11 and the tray side beams 12 are connected together to define an accommodating space. For example, the tray bottom plate 11 and the tray side beams 12 may be welded together. In the embodiment, the tray side beams 12 include a first side beam 121, a second side beam 122, a third side beam 123, and a fourth side beam 124. The first side beam 121, the second side beam 122, the third side beam 123, and the fourth side beam 124 are all connected to the tray bottom plate 11 to define an accommodating space.

In the embodiment, the battery core module 2 and the liquid cooling plate 3 are both arranged in the accommodating space. The liquid cooling plate 3 is located between the battery core module 2 and the tray bottom plate 11. Specifically, the battery core module 2 includes a plurality of battery cores 21. Each battery core21 has a first explosion-proof valve 213. A surface of the battery core 21 provided with the first explosion-proof valve 213 is arranged towards the liquid cooling plate 3. To be specific, each battery core 21 in the battery core module 2 is arranged upside down in the tray 1.

In the embodiment, the liquid cooling plate 3 has a first surface 31 and a second surface 32. The first surface 31 is arranged facing away from the tray bottom plate 11, and the second surface 32 is arranged toward the tray bottom plate 11. Specifically, the liquid cooling plate 3 is arranged on the tray bottom plate 11, and is located between the tray bottom plate 11 and the battery core module 2. For example, the second surface 32 of the liquid cooling plate 3 and the tray bottom plate 11 are fixed together through a structural adhesive. The battery core module 2 is arranged on the first surface 31 of the liquid cooling plate 3. For example, the battery core module 2 and the first surface 31 of the liquid cooling plate 3 are fixed together through a thermally conductive structural adhesive.

In the embodiment, a through hole 33 is formed in the liquid cooling plate 3. The through hole 33 extends through the first surface 31 and the second surface 32 of the liquid cooling plate 3. To be specific, the through hole 33 extends through the liquid cooling plate 3 in a thickness direction of the liquid cooling plate 3. The battery core 21 in the battery core module 2 is arranged on the first surface 31 of the liquid cooling plate 3. The first explosion-proof valve 213 arranged on the battery core 21 is opposite to the through hole 33 of the liquid cooling plate 3. For example, the battery core module 2 is arranged on the liquid cooling plate 3. The first explosion-proof valve 213 may be embedded in the through hole 33, or the first explosion-proof valve 213 is not directly arranged in the through hole 33, but in terms of position, the first explosion-proof valve 213 corresponds to the through hole 33. To be specific, the first explosion-proof valve 213 is in communication with the through hole 33.

In the embodiment, the first explosion-proof valve 213 arranged on the battery core 21 is opposite to the through hole 33 of the liquid cooling plate 3. When a thermal runaway occurs in the battery core 21, high-temperature smoke generated at the battery core 21 may be emitted through the through hole 33 formed in the liquid cooling plate 3.

In the embodiment, the first explosion-proof valve 213 arranged on the battery core 21 is opposite to the through hole 33 of the liquid cooling plate 3. Specifically, the battery core module 2 includes a plurality of battery cores 21. Each battery core 21 is provided with a first explosion-proofvalve 213. To correspond to the first explosion-proof valve 213 in the battery core module 2, a plurality of through holes 33 are also formed in the liquid cooling plate 3. The first explosion-proof valves 213 are in one-to-one correspondence with the through holes 33. For example, referring to FIG. 2, battery cores 21 in the battery core module 2 are arranged in four rows and fifteen columns. Correspondingly, four rows and fifteen columns of through holes 33 are also formed in the liquid cooling plate 3. In an optional embodiment, a mounting hole is provided close to a position of each through hole 33. For example, the liquid cooling plate 3 may be fixed to the tray bottom plate 11 through a fastener.

In the embodiment, the liquid cooling plate 3 is arranged on the tray bottom plate 11. The first channel 41 is formed between the second surface 32 of the liquid cooling plate 3 and the tray bottom plate 11. In addition, in this embodiment of the present disclosure, the second channel 42 is formed in the tray side beam 12. The first channel 41 is arranged to be in communication with the second channel 42.

Specifically, since the first explosion-proof valve 213 of the battery core 21 is opposite to the through hole 33 formed in the liquid cooling plate 3, when the thermal runaway occurs in the battery core 21, generated high-temperature smoke is emitted, through the corresponding through hole 33, into the first channel 41 formed by the second surface 32 of the liquid cooling plate 3 and the tray bottom plate 11. Since the first channel 41 is arranged to be in communication with the second channel 42, the generated high-temperature smoke may flow along the first channel 41 to the second channel 42, and the high-temperature smoke is emitted through the tray side beam 12.

Therefore, in this embodiment of the present disclosure, a battery pack is provided. The battery pack includes a tray 1, a liquid cooling plate 3, and a battery core module 2. The liquid cooling plate 3 is located between the battery core module 2 and the tray 1. A first explosion-proof valve 213 arranged on a battery core 21 in the battery core module 2 is opposite to a through hole 33 formed in the liquid cooling plate 3. When a thermal runaway occurs in the battery core 21, generated high-temperature smoke is emitted, through the corresponding through hole 33, into a first channel 41 formed by a second surface 32 of the liquid cooling plate 3 and a tray bottom plate 11. Since the first channel 41 is arranged to be in communication with the second channel 42, the generated high-temperature smoke may flow along the first channel 41 to the second channel 42. The high-temperature smoke is emitted through a tray side beam 12, which prevents accumulation of a large amount of high-temperature smoke in the battery pack from further affecting safety of the battery pack.

In this embodiment of the present disclosure, since the first channel 41 is formed by the second surface 32 of the liquid cooling plate 3 and the tray bottom plate 11, when high-temperature smoke puffed by the battery core 21 through the first explosion-proof valve 213 is blocked outside the battery core module 2 by the liquid cooling plate 3, impact of the high-temperature smoke on another battery core 21 is reduced. In addition, when the high-temperature smoke flows through the first channel 41 to the second channel 42, the high-temperature smoke is gradually cooled through the liquid cooling plate 3 while being emitted outward, which gradually reduces harm caused by the high-temperature smoke to the battery pack and may ensure the safety of the battery pack to a certain extent.

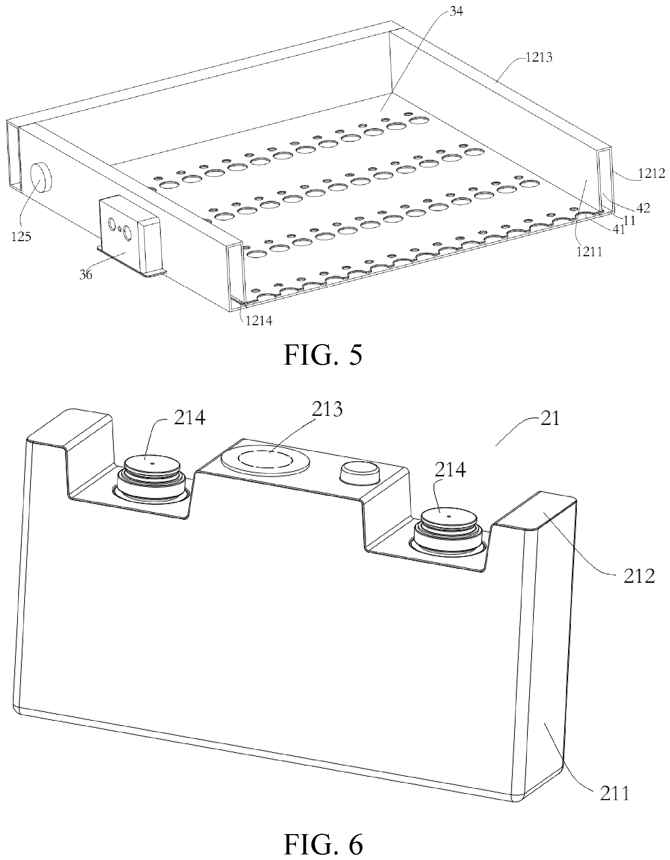

In an embodiment, referring to FIG. 6, the battery core 21 includes a battery core housing 211 and a cover plate 212. The cover plate 212 is arranged on the battery core housing 211. A first region and a second region are formed on the cover plate 212. The first region is recessed relative to the second region. The first region is provided with a battery core terminal 214 therein. The second region is provided with the first explosion-proof valve 213 therein.

The battery core module 2 is arranged on the liquid cooling plate 3. A clearance exists between the battery core terminal 214 and the first surface 31 of the liquid cooling plate 3.

In the embodiment, the battery core 21 includes a battery core housing 211 and a cover plate 212. The cover plate 212 is arranged on the battery core housing 211. When the battery core module 2 is arranged on the liquid cooling plate 3, the battery core module 2 is in contact with the first surface 31 of the liquid cooling plate 3, that is, the cover plate 212 of the battery core 21 is arranged toward the liquid cooling plate 3, and the cover plate 212 is in contact with the first surface 31 of the liquid cooling plate 3. The liquid cooling plate 3 may cool the cover plate 212, and cool a terminal arranged on the cover plate 212.

In the embodiment, a first region and a second region are formed on the cover plate 212. The first region is recessed relative to the second region. A battery core terminal 214 is arranged in the first region, and the firstexplosion-proofvalve 213 is arranged in the second region. Therefore, the battery core terminal 214 is arranged at a position lower than the first explosion-proof valve 213. In a case that the battery core module 2 is arranged on the liquid cooling plate 3, and the battery core module 2 is in contact with the first surface 31 of the liquid cooling plate 3, a clearance exists between the battery core terminal 214 and the first surface 31 of the liquid cooling plate 3, to prevent contact between the battery core terminal 214 and the liquid cooling plate 3 (made of a metal material) from affecting an electrical connection of the battery core 21. For example, occurrence of a short circuit may be avoided.

Referring to FIG. 6, two first regions are formed on the cover plate 212. A second region is located between the two regions. A corresponding battery core terminal 214 is arranged in each first region. For example, the battery core terminal 214 includes a positive terminal and a negative terminal. The positive terminal may be arranged in the first region on a right side, and the negative terminal may be arranged in the first region on a left side. Alternatively, two first regions are formed on the cover plate 212. The two first regions are arranged adjacent to each other. The second region is located on a side of one of the first regions. Alternatively, one first region and one second region are formed on the cover plate 212, and two battery core terminals 214 are arranged in the first region.

In an embodiment, a side of the tray side beam 12 facing away from the accommodating space is provided with a second explosion-proof valve 125. The second channel 42 is in communication with the second explosion-proof valve 125.

In the embodiment, the tray side beam 12 is provided with a second explosion-proof valve 125 (a pack explosion-proof valve). The second explosion-proof valve 125 is arranged facing away from the accommodating space. Specifically, a second channel 42 is formed in the tray side beam 12. When the high-temperature smoke is emitted to the second channel 42, and the high-temperature smoke in the second channel 42 reaches a threshold, the second explosion-proof valve 125 may be opened to exhaust the high-temperature smoke in the second channel 42 to outside of the battery pack through the second explosion-proof valve 125, thereby preventing the impact of the high-temperature smoke on the battery core module 2 in the battery pack.

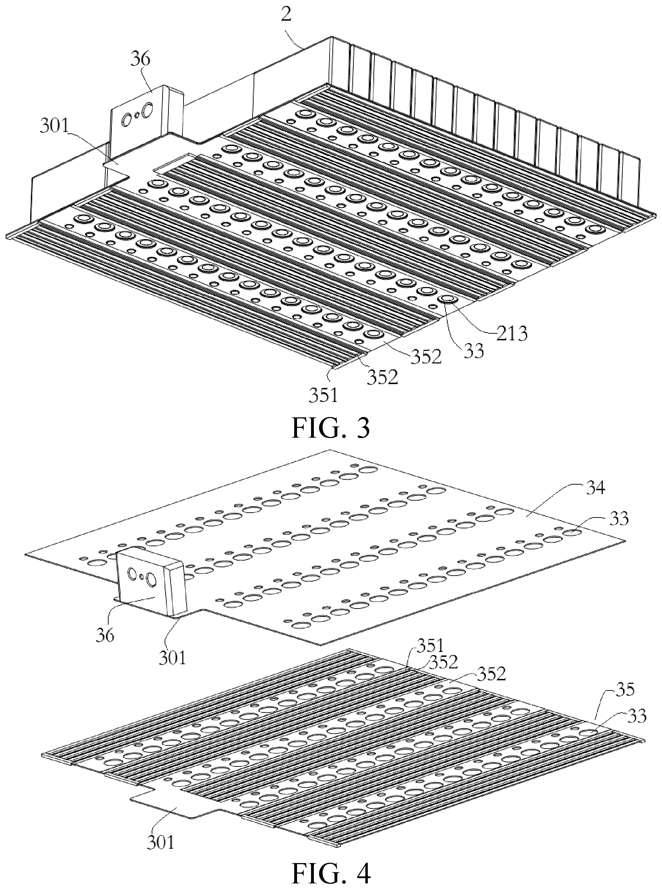

In an embodiment, referring to FIG. 4 and FIG. 3, the liquid cooling plate 3 includes an upper liquid cooling plate 34 and a lower liquid cooling plate 35. The upper liquid cooling plate 34 is connected to the lower liquid cooling plate 35.

The upper liquid cooling plate 34 is in contact with the battery core module 2.

A plurality of spaced apart convex ribs 351 are formed on the lower liquid cooling plate 35, and a groove 352 is formed between adjacent convex ribs 351. The groove 352, the tray bottom plate 11, and the convex rib 351 define the first channel 41.

In the embodiment, the liquid cooling plate 3 includes the upper liquid cooling plate 34 and the lower liquid cooling plate 35. Generally, the upper liquid cooling plate 34 is a vapor chamber, and the lower liquid cooling plate 35 is a runner plate. The upper liquid cooling plate 34 and the lower liquid cooling plate 35 are connected to form the liquid cooling plate 3. For example, the upper liquid cooling plate 34 and the lower liquid cooling plate 35 may be connected together by brazing.

Specifically, a through hole 33 is provided on the liquid cooling plate 3. For example, the through hole 33 is formed in both the upper liquid cooling plate 34 and the lower liquid cooling plate 35. When the two plates are welded together, the through holes 33 respectively formed in the upper liquid cooling plate 34 and the lower liquid cooling plate 35 are in one-to-one correspondence.

In the embodiment, the upper liquid cooling plate 34 is located above the lower liquid cooling plate 35. When the liquid cooling plate 3 is arranged on the tray bottom plate 11, the battery core module 2 is in direct contact with the upper liquid cooling plate 34. In an optional embodiment, the upper liquid cooling plate 34 is of a flat structure, so that the battery core module 2 is fixed to the upper liquid cooling plate 34.

Referring to FIG. 3 and FIG. 4, a plurality of spaced apart convex ribs 351 are formed on the lower liquid cooling plate 35. For example, a plurality of convex ribs 3 51 are formed on the lower liquid cooling plate 35 in a manner such as stamping. The adjacent convex ribs 351 are spaced apart, so that a groove 352 (relative to the convex rib 351) is formed between the adjacent convex ribs 351. When the lower liquid cooling plate 35 is fixed to the tray bottom plate 11, the convex rib 351 is in contact with the tray bottom plate 11, and the groove 352 is not in contact with the tray bottom plate 11. Avoid is formed between the groove 352 and the tray bottom plate 11. The void is the first channel 41. When the thermal runaway occurs in the battery core 21, generated high-temperature smoke may be emitted, through the corresponding through hole 33, into the first channel 41 formed by the second surface 32 of the liquid cooling plate 3 and the tray bottom plate 11, so as to cool the high-temperature smoke through the liquid cooling plate 3.

Referring to FIG. 3 and FIG. 4, in a specific embodiment, five sets of convex ribs are formed on the lower liquid cooling plate 35. Each set of convex ribs includes four convex ribs 351. The convex ribs 351 are spaced apart, so that a groove 352 is formed between adjacent convex ribs 351. Adjacent convex rib sets are also spaced apart, so that the groove 352 is also formed between the adjacent convex rib sets. Each of the convex ribs 351 extends along a length direction of the tray 1. A through hole 33 is formed in the groove 352 formed between the adjacent convex rib sets, so that the through hole 33 may be directly brought into communication with the first channel 41, so as to smoothly exhaust the high-temperature smoke generated at the battery core module 2 to the first channel 41, and cool the high-temperature smoke through the liquid cooling plate 3.

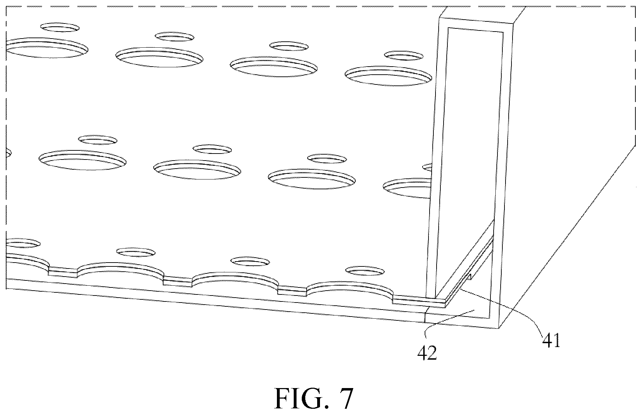

In an embodiment, referring to FIG. 5 and FIG. 7, the tray side beam 12 includes a first sub-side beam 1211, a second sub-side beam 1212, and a connecting plate 1213. The first sub-side beam 1211 is arranged opposite to the second sub-side beam 1212. The connecting plate 1213 is arranged opposite to the tray bottom plate 11. One end of the connecting plate 1213 is connected to the first sub-side beam 1211. Another end of the connecting plate 1213 is connected to the second sub-side beam 1212. The first sub-side beam 1211, the second sub-side beam 1212, the connecting plate 1213, and the tray bottom plate 11 define the second channel 42.

In the embodiment, the second channel 42 formed in the tray side beam 12 is defined. For example, the tray side beam 12 may be formed in a manner such as stamping, so that the first sub-side beam 1211, the second sub-side beam 1212, and the connecting plate 1213 are integrally formed. The first sub-side beam 1211 and the second sub-side beam 1212 are opposite and spaced apart. The first sub-side beam 1211 and the second sub-side beam 1212 are connected through the connecting plate 1213, so that the first sub-side beam 1211, the second sub-side beam 1212, the connecting plate 1213, and the tray bottom plate 11 define the second channel 42.

For example, the second channel 42 may be formed on each of the first side beam 121, the second side beam 122, the third side beam 123, and the fourth side beam 124. Alternatively, referring to FIG. 1, the first side beam 121 is arranged opposite to the third side beam 123 in a width direction (that is, a direction indicated by an arrow b) of the battery pack. The second side beam 122 is arranged opposite to the third side beam 123 in a length direction (that is, a direction indicated by an arrow a) of the battery pack. The second channel 42 may be formed on the first side beam 121 and the third side beam 123, or the second channel 42 may be formed only on the second side beam 122 and the fourth side beam 124. No matter which side beam the second channel 42 is formed on, communication between the first channel 41 and the second channel 42 needs to be realized. Therefore, the second channel 42 may be selectively formed on a side beam of the tray 1 based on an arrangement direction of the first channel 41.

In an embodiment, referring to FIG. 5 and FIG. 7, the first sub-side beam 1211 is arranged closer to the accommodating space than the second sub-side beam 1212, and a mounting gap 1214 is formed between the first sub-side beam 1211 and the tray bottom plate 11.

The liquid cooling plate 3 is arranged on the tray bottom plate 11. An edge portion of the liquid cooling plate 3 extends through the mounting gap 1214 and is located in the second channel 42, to cause the first channel 41 to be in communication with the second channel 42.

In the embodiment, the first sub-side beam 1211 is arranged closer to the accommodating space than the second sub-side beam 1212. In a height direction of the battery pack, a height dimension of the first sub-side beam 1211 is less than a height dimension of the second sub-side beam 1212. The second sub-side beam 1212 and the tray bottom plate 11 are connected together. The first sub-side beam 1211 and the tray bottom plate 11 are not connected together, and the mounting gap 1214 is formed between the first sub-side beam 1211 and the tray bottom plate 11.

When the liquid cooling plate 3 is arranged on the tray bottom plate 11, that is, the liquid cooling plate 3 is fixed to the tray bottom plate 11, the edge portion of the liquid cooling plate 3 can extend into the mounting gap 1214, so that the first channel 41 formed between the liquid cooling plate 3 and the tray bottom plate 11 is in communication with the second channel 42 formed between the tray side beams 12, so as to smoothly exhaust the high-temperature smoke discharged into the first channel 41 to the second channel 42, and exhaust the high-temperature smoke outside battery pack.

In an embodiment, referring to FIG. 2, FIG. 3, and FIG. 5, the liquid cooling plate 3 includes a liquid cooling plate body 30 and a cold plate interface 36. The liquid cooling plate body 30 has a bearing portion 301 formed thereon.

A slit 126 is formed in the tray side beam 12. The bearing portion 301 extends through the slit 126 and extends out of the accommodating space. The cold plate interface 36 is arranged on the bearing portion 301.

In the embodiment, the slit 126 is formed in the tray side beam 12. In a length direction (that is, a direction indicated by an arrow a) of the battery pack, the slit 126 extends through the tray side beam 12. When the liquid cooling plate 3 is fixed to the tray bottom plate 11, the bearing portion 301 of the liquid cooling plate body 30 can pass through the slit 126 and be located outside the battery pack. When the bearing portion 301 of the liquid cooling plate body 30 is located outside the battery pack, a cold plate interface 36 is arranged on the liquid cooling plate body 30, so as to transmit a coolant to the liquid cooling plate 3.

In an embodiment, referring to FIG. 1 to FIG. 5 and FIG. 7, the first channel 41 formed by the liquid cooling plate 3 and the tray bottom plate 11 is arranged along a first direction of the battery pack, and the tray side beams 12 having the second channel 42 formed therein are opposite and spaced apart in the first direction of the battery pack.

In the embodiment, an extension direction of the first channel 41 and a relative direction of the tray side beam 12 having the second channel 42 formed therein are defined. The extension direction of the first channel 41 is the same as the relative direction of the tray side beam 12 having the second channel 42 formed therein. When the liquid cooling plate 3 is arranged on the tray bottom plate 11, the first channel 41 formed between the liquid cooling plate 3 and the tray bottom plate 11 can be directly in communication with the second channel 42 formed in the tray side beam 12.

Referring to FIG. 5 and FIG. 1, the first channel 41 formed between the liquid cooling plate 3 and the tray bottom plate 11 is arranged along the first direction (the length direction of the battery pack) of the battery pack. To be specific, the first channel 41 is arranged to extend along the length direction of the battery pack. The second channel 42 is arranged on each of the second side beam 122 and the fourth side beam 124. The second side beam 122 and the fourth side beam 124 are opposite and spaced apart from each other in the length direction of the battery pack. When the liquid cooling plate 3 is arranged on the tray bottom plate 11, the first channel 41 formed between the liquid cooling plate 3 and the tray bottom plate 11 can be directly in communication with the second channel 42 formed in the tray side beam 12.

In an embodiment, referring to FIG. 1 and FIG. 2, the battery pack further includes a sealing cover 5. The sealing cover 5 is arranged on the tray 1.

In the embodiment, the battery pack further includes a sealing cover 5. The sealing cover 5 is arranged on the tray 1, and can protect the liquid cooling plate 3 and the battery core module 2 arranged inside the tray 1.

According to a second aspect, a vehicle is provided. The vehicle includes the battery pack described in the first aspect.

In the embodiment, a vehicle is provided. The vehicle may be a hybrid vehicle or an electric vehicle.

The above embodiments focus on the differences between the embodiments. The embodiments may be combined into more optimal embodiments as long as the different optimization features of the embodiments are not contradictory. For brevity, the details are not described herein again.

Although some specific embodiments of the present disclosure have been described in detail by way of examples, a person skilled in the art should understand that the above examples are merely for description and are notintended to limit the scope of the present disclosure. A person skilled in the art should understand that modifications may be made to the above embodiments without departing from the scope and spirit of the present disclosure. The scope of the present disclosure is defined by the appended claims.

## Claims

1. A battery pack, comprising:
a tray (1), the tray (1) comprising a tray bottom plate (11) and tray side beams (12), the tray bottom plate (11) and the tray side beams (12) being connected to form an accommodating space;
a battery core module (2), the battery core module (2) being located in the accommodating space, the battery core module (2) comprising a plurality of battery cores (21), and each of the battery cores (21) having a first explosion-proof valve (213); and
a liquid cooling plate (3), the liquid cooling plate (3) being located between the battery core module (2) and the tray bottom plate (11) and arranged on the tray bottom plate (11), the liquid cooling plate (3) having a first surface (31) and a second surface (32), a plurality of through holes (33) being formed in the liquid cooling plate (3), each of the through holes (33) extending through the first surface (31) and the second surface (32);
the battery core module (2) being in contact with the first surface (31), and the first explosion-proof valve (213) of the battery core (21) being opposite to the through hole (33);
a first channel (41) being disposed between the second surface (32) of the liquid cooling plate (3) and the tray bottom plate (11), a second channel (42) being formed in each of the tray side beams (12), and the first channel (41) being in communication with the second channel (42), to cause smoke generated at the battery core module (2) to flow to the second channel (42).

2. The battery pack according to claim 1, wherein the battery core (21) comprises a battery core housing (211) and a cover plate (212), the cover plate (212) being arranged on the battery core housing (211), a first region and a second region being formed on the cover plate (212), the first region being recessed relative to the second region, the first region being provided with a battery core terminal (214) therein, and the second region being provided with the first explosion-proof valve (213) therein; and
the battery core module (2) is arranged on the liquid cooling plate (3), and a clearance exists between the battery core terminal (214) and the first surface (31) of the liquid cooling plate (3).

3. The battery pack according to claim 1 or 2, wherein a side of the tray side beam (12) facing away from the accommodating space is provided with a second explosion-proof valve (125), the second channel (42) being in communication with the second explosion-proof valve (125).

4. The battery pack according to any of claims 1 to 3, wherein the liquid cooling plate (3) comprises an upper liquid cooling plate (34) and a lower liquid cooling plate (35), the upper liquid cooling plate (34) being connected to the lower liquid cooling plate (35);
the upper liquid cooling plate (34) is in contact with the battery core module (2); and
a plurality of spaced apart convex ribs (351) are formed on the lower liquid cooling plate (35), a groove (3 52) is formed between adjacent convex ribs (35 1), and the groove (352), the tray bottom plate (11), and the convex rib (351) define the first channel (41).

5. The battery pack according to any of claims 1 to 4, wherein the tray side beam (12) comprises a first sub-side beam (1211), a second sub-side beam (1212), and a connecting plate (1213), the first sub-side beam (1211) being arranged opposite to the second sub-side beam (1212), the connecting plate (1213) being arranged opposite to the tray bottom plate (11), one end of the connecting plate (1213) being connected to the first sub-side beam (1211), another end of the connecting plate (1213) being connected to the second sub-side beam (1212), and the first sub-side beam (1211), the second sub-side beam (1212), the connecting plate (1213), and the tray bottom plate (11) defining the second channel (42).

6. The battery pack according to claim 5, wherein the first sub-side beam (1211) is arranged closer to the accommodating space than the second sub-side beam (1212), and a mounting gap (1214) is formed between the first sub-side beam (1211) and the tray bottom plate (11); and
the liquid cooling plate (3) is arranged on the tray bottom plate (11), and an edge portion of the liquid cooling plate (3) extends through the mounting gap (1214) and is located in the second channel (42), to cause the first channel (41) to be in communication with the second channel (42).

7. The battery pack according to any of claims 1 to 6, wherein the liquid cooling plate (3) comprises a liquid cooling plate body (30) and a cold plate interface (36), the liquid cooling plate body (30) having a bearing portion (301) formed thereon; and
a slit (126) is formed in the tray side beam (12), the bearing portion (301) extends through the slit (126) and extends out of the accommodating space, and the cold plate interface (36) is arranged on the bearing portion (301).

8. The battery pack according to any of claims 1 to 7, wherein the first channel (41) formed by the liquid cooling plate (3) and the tray bottom plate (11) is arranged along a first direction of the battery pack, and the tray side beams (12) having the second channel (42) formed therein are opposite and spaced apart in the first direction of the battery pack.

9. The battery pack according to any of claims 1 to 8, further comprising a sealing cover (5), the sealing cover (5) being arranged on the tray (1).

10. A vehicle, comprising the battery pack according to any of claims 1 to 9.
